# EUROPÄISCHE PATENTSCHRIFT

(11) **EP 0 609 757 B1**
(45) Veröffentlichungstag und Bekanntmachung des Hinweises auf die Patenterteilung: **30.09.1998**
(21) Anmeldenummer: 94101095.1
(22) Anmeldetag: 26.01.1994
(51) Int. Cl.: B65G 1/04

(54) **Kanallager zum Ein- und Auslagern von Kisten- oder plattenförmigem Gut, insbesondere von Wellpappestapeln beliebiger Abmessungen**
Channel shelf for stocking and destocking case- or platelike goods, especially stacks of corrugated cardboards of any dimension
Entrepôt de canaux pour stocker et déstocker des marchandises en forme de caisse ou de plaque, notamment des cartons ondulés de toutes les dimensions

(30) Priorität: 04.02.1993 DE 9301545 U
(43) Veröffentlichungstag der Anmeldung: 10.08.1994
(73) Patentinhaber: WITRON Logistik & Informatik GmbH, 92711 Parkstein (DE)
(72) Erfinder: Winkler, Walter, D-92711 Parkstein (DE)
(74) Vertreter: Betten & Resch

(56) Entgegenhaltungen:
- WO-A-92/01614
- DE-A- 3 100 418
- US-A- 3 921 840

## Beschreibung

Die Erfindung bezieht sich auf ein Kanallager gemäß dem Oberbegriff des Patentanspruchs 1.

Bei nach dem Satellitenprinzip verfahrenden Lagersystemen herkömmlicher Art erfolgt das Ein- und Auslagern der Gegenstände derart, daß ein oder mehrere Gegenstände von einer Beladestation von dem Transferfahrzeug aufgenommen werden und dieses den entsprechenden Lagerkanal anfährt. Das Satellitenfahrzeug, das auf einer an seiner Oberseite angeordneten Plattform den oder die Gegenstände trägt, fährt sodann in den jeweiligen Lagerkanal ein und transportiert den Gegenstand an eine vorbestimmte Stelle, wo dieser abgesetzt wird und bis zum Auslagern verbleibt. Das Aus lagern erfolgt dann in umgekehrter Weise. Ein einmal abgesetzter Gegenstand kann nur wieder von dem Satellitenfahrzeug in der bzw. aus der jeweiligen Lagerreihe transportiert werden kann. Ein manueller Transport ist infolge der Unbeweglichkeit des Gegenstandes nicht mehr möglich, so daß insbesondere bei Funktionsstörungen des Transfer- oder Satellitenfahrzeugs eine Fortführung des Lagerbetriebes unmöglich ist. Ferner ist es bei herkömmlichern Lagern nicht möglich, Lagergüter beliebiger Abmessungen einzulagern, da bei herkömmlichern Lagern feste Stellplätze für feste Abmessungen vorgegeben sind. Eine flexible Anpassung an unterschiedliche und sich ändernde Abmessungen der einzulagernden Güter ist somit nicht möglich, was eine geringe Lagerdichte und einen niedrigen Füllungsgrad zur Folge haben kann.

Der Erfindung liegt daher die Aufgabe zugrunde, ein automatisches Kanallager gemaß dem Oberbegriff des Anspruchs 1 so weiterzubilden, daß eine sehr hohe Lagerdichte auch für Lagergut unterschiedlicher Größe erzielt werden kann.

Diese Aufgabe wird erfindungsgemäß im wesentlichen dadurch gelöst, daß das Transferfahrzeug zwei Satellitenfahrzeuge aufweist, die wahlweise gemeinsam oder einzeln in sich parallel erstreckende Lagerkanäle einfahrbar sind, und daß die Auflagebereiche für die einzelnen Güter so ausgebildet sind, daß sie sich über zwei oder mehr Lagerkanäle erstrecken können. Insbesondere können die Auflagebereiche in bevorzugter Weiterbildung aus mehreren nebeneinander angeordneten, zwei oder mehrere Lagerkanäle bildenden Profilträgern gebildet werden.

Mit solchermaßen vergrößerten Auflagebereichen ist es möglich, auch beliebige Lagergüter unterschiedlichster Größe mittels eines oder zweier Satellitenfahrzeuge in ein und dasselbe Lager einzulagern. Zum einen ist so die Einlagerung z.B. sehr großer und sehr kleiner Gegenstände problemlos möglich, da die großen Gegenstände einfach auf mehreren, theoretisch beliebig vielen von den Profilträgern gebildeten Auflagebereichen abgesetzt werden können, die kleinen beispielsweise nur auf einem einzelnen Auflagebereich, so daß mit einem derartig gebauten Kanallager äußerst flexibel auf sich häufig ändernde Güterabmessungen reagiert werden kann. Zum anderen ist, da keine Güterabmessungen fest vorgegeben sind, eine Einlagerung großer und kleiner Gegenstände nebeneinander ebenfalls problemlos möglich. Da in einem derartigen Kanallager keine feste Stellplätze für feste Abmessungen vorgegeben sind, ist es bei entsprechend optimierter Einlagerung möglich, eine extrem hohe Lagerdichte bei zugleich hohem Füllungsgrad zu erzielen, da die einzelnen Lagergüter bzw. Stapel dichtestmöglich aneinandergestellt werden können und die zum Vereinzeln nötige Lücke zwischen den Stapeln kleinstmöglich und definiert gewählt werden kann. Ein weiterer Vorteil einer derartigen Ausgestaltung der Auflagebereiche liegt darin, daß insbesondere sehr große Lagergegenstände, bei denen die Möglichkeit eines mittigen Durchbiegens besteht, was insbesondere bei Wellpappestapeln der Fall sein kann, sicher und ohne Beschädigung eingelagert werden können. Da die Auflagebereiche zweckmäßig so unterteilt sind, daß die Lagergüter zum einen randseitig auf den äußeren Profilträgern der Lagerkanäle aufliegen, zum anderen auf dem oder den mittig angeordneten, die Lagerkanäle bildenden Profilträgern abgesetzt sind und durch diese mittige Auflage das Lagergut vorteilhaft abgestützt wird, ist somit ein Durchbiegen nicht möglich.

In bevorzugter Weiterbildung der Erfindung ist vorgesehen, daß die aus den Profilträgern gebildeten Auflagebereiche mit Rollen versehen sind, auf die das Lagergut absetzbar ist. Der Vorteil einer derartigen Rollenanordnung liegt darin, daß die Gegenstände nicht mehr auf den Auflagebereichen direkt aufliegen, auf denen sie, bedingt durch ihr Eigengewicht, nicht verschiebbar wären, sondern daß sie auf den Rollen aufliegen, und somit einfachst manuell entlang der Lagerreihe verschoben werden können. Zum Transport innerhalb der Lagerreihe ist somit ein Einfahren des Satellitenfahrzeugs nicht mehr nötig, demgemäß ist ein Transport auch bei Funktionsstörungen des Satellitenfahrzeugs möglich. Ein weiterer Vorteil eines derartigen Lageraufbaus besteht darin, daß infolge des einfachen Aufbaus des Lagers bzw. der Auflagebereiche aus C-Profilträgern der Lagergrundriß an das jeweilige vorhandene Flächenangebot des Lagerraumes angepaßt und so das Platzangebot optimal ausgenutzt werden kann, das heißt, daß keine Rechteckform des Lagers vorgeschrieben ist, sondern jedwede Form möglich ist. Ferner ist ein derartiges Lager vollständig in vorhandene Systeme integrierbar und an verschiedenste Förderelemente für die Lagergüter, z.B. Rollenbahnen, Wandförderer, etc. anschließbar. Da im Lager keine bewegliche Mechanik, Motoren oder Sensorik verwendet wird, sind die Betriebs- und Wartungskosten äußerst gering.

In Weiterführung der Erfindung kann vorgesehen sein, daß die Rollen an der Oberseite bzw. -kante der Profilträger angeordnet sind. Eine derartige Anordnung der Rollen direkt an den die Auflagebereiche bildenden Profilträgern ist insbesondere bei eng aneinandergereihten oder miteinander verbundenen Profilträgern und dementsprechend kleinen einzulagernden Gegenständen, die nur auf den Oberseiten der Profilträger aufliegen, vorteilhaft. Somit ist auch bei solch kleineren Gegenständen ein manuelles Verschieben gewährleistet.

Im Rahmen der Erfindung kann ferner vorgesehen sein, daß die Rollen bei beabstandeten Profilträgern an zwischen den Profilträgern angeordneten Tischen neben- und/oder hintereinander angeordnet sind. Mit besonderem Vorteil werden bei weiter auseinanderstehenden Profilträgern die Zwischenbereiche zwischen den Profilträgern zur Vergrößerung der Auflagebereiche mit Tischen oder Platten verbunden. Die Anordnung der Rollen erfolgt dann zweckmäßigerweise an den Tischen, so daß auch größere Gegenstände sicher auf den Rollen geführt werden können. Die Anordnung der Rollen neben- bzw. hintereinander ist insbesondere dahingehend vorteilhaft, daß auch Gegenstände unterschiedlicher Größe, die unterschiedlich Platz erfordernd auf den Auflagebereichen abgesetzt werden, auf Rollen aufliegen. Zur weiteren Größenanpassung können auch die Profilträger selbst vorteilhaft mit Rollen versehen sein.

Auf der Basis der Erfindung kann ferner vorgesehen sein, daß die Rollen eine Walzenform besitzen und bei beabstandeten Profilträgern zwischen den Profilträgern, diese verbindend, angeordnet sind. Sehr vorteilhaft können anstelle einer Vielzahl von Einzelrollen auch hintereinander angeordnete walzenförmige Rollen zwischen den Profilträgern angebracht werden, mit denen ebenso ein manuelles Verschieben möglich ist. Auch hier ist ein Aufliegen auch unterschiedlich großer Gegenstände möglich, ferner können ebenso die Profilträger zusätzlich mit Rollen versehen sein.

Im folgenden werden mehrere Ausführungsbeispiele der Erfindung anhand der Zeichnung näher beschrieben. Dabei zeigen:
- Fig. 1: eine perspektivische Ansicht eines Lagers mit Transfer-, Satellitenfahrzeug und einzelnen Lagerreihen;
- Fig. 2: eine perspektivische Ansicht der Profilträger aus Fig. 1 oder 5 mit daran angeordneten Rollen;
- Fig. 3: eine perspektivische Ansicht einer Anordnung eines mit Rollen versehenen Tisches zwischen den Profilträgern aus Fig. 1 oder 5;
- Fig. 4: zwischen den Profilträgern aus Fig. 1 oder 5 angeordnete walzenförmige Rollen; und
- Fig. 5: eine perspektivische Ansicht eines erfindungsgemäßen Lagers insbesondere für große einzulagernde Güter.

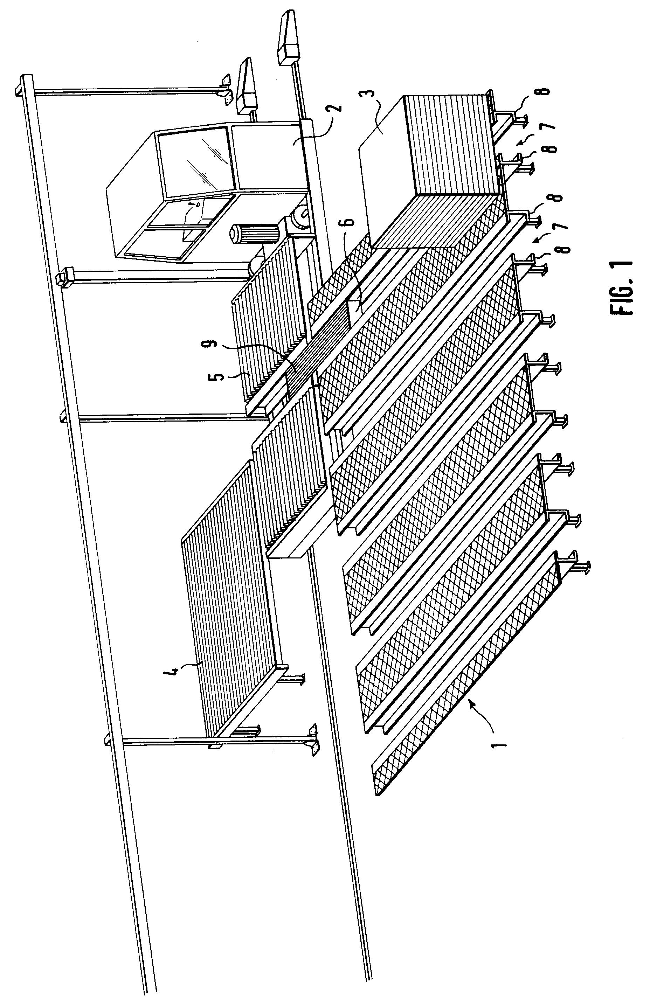

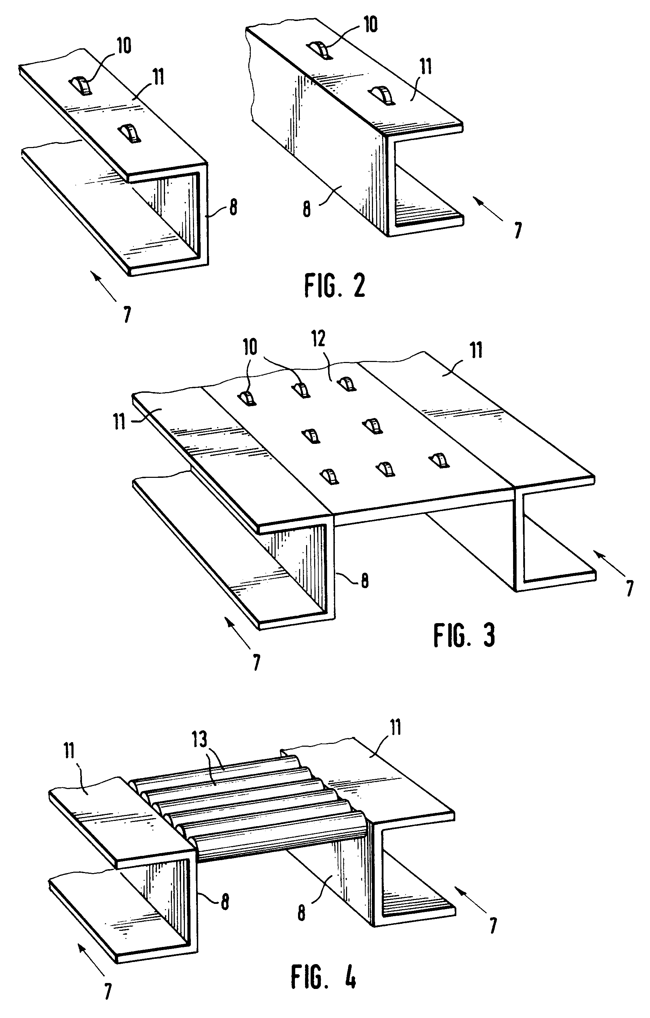

Fig. 1 zeigt ein (nicht unter den Anspruch 1 fallendes, lediglich der Erläuterung dienendes) Kanallager 1, bei dem ein schienengebundenes Transferfahrzeug 2 die einzulagernden Güter 3 von einer Beladestation 4 aufnimmt. In die Transportplattform 5 des Transferfahrzeugs 2 ist ein senkrecht zur Fahrtrichtung des Transferfahrzeuges 2 ausfahrbares Satellitenfahrzeug 6 integriert. Das mit Lagergütern 3 beladene Transferfahrzeug fährt sodann den jeweiligen vorbestimmten Lagerkanal 7 an, der durch einander mit ihren Flanschen zugekehrte C-Profilträger 8 gebildet wird. Nach Erreichen der exakten Position des Transferfahrzeugs 2 wird das auf der Plattform 5 befindliche Lagergut 3 von dem Satellitenfahrzeug 6 über eine auf dessen Oberseite befindliche Hubplattform 9 angehoben. Sodann fährt das so beladene Satellitenfahrzeug 6 in den Lagerkanal 7 ein. Das Satellitenfahrzeug 6 ist dabei selbsttätig verfahrbar, die Steuerung erfolgt in der Regel über Schleppkabel. Nach Erreichen der vorbestimmten Position im Lagerkanal 7 wird das Lagergut 3 durch Absenken der Hubplattform 9 auf den Auflageflächen der Profilträger 8 abgesetzt. Nach dem Absetzen fährt das Satellitenfahrzeug 6 wieder in die Plattform 5 ein, der Einlagervorgang ist danach abgeschlossen. Um nun ein manuelles Verschieben der eingelagerten Güter 3 längs des Lagerkanals 7 auch bei Funktionsausfall des Transferfahrzeugs 2 bzw. des Satellitenfahrzeugs 6 zu gewährleisten, sind an den Profilträgern 8 bzw. an den von diesen vorbestimmten Auflagebereichen Rollen 10 angebracht, wie in den Figuren 2 bis 4 dargestellt.

Wie in Fig. 2 gezeigt, können dabei die Rollen an den Profilträgern 8 selbst angebracht werden. Ihre Anbringung erfolgt dabei hintereinander. Sind die Oberflansche 11 der Profilträger 8 breit genug, können mehrere Rollen 10 auch nebeneinander angeordnet werden. Der Abstand der Rollen 10 in Richtung des Lagekanals 7 sollte dabei der Größe der einzulagernden Güter 3 angepaßt sein, so daß ein Aufliegen auf den Oberflanschen beim Verschieben von insbesondere kleinen Gegenständen, was sich auf den Lagerbetrieb dann störend auswirkt, vermieden wird. Eine derartige Anbringung der Rollen 10 ist insbesondere dann vorteilhaft, wenn zur Lagerkanalbildung keine voneinander beabstandete C-Profilträger 8 verwendet werden, sondern z.B. Doppel-T-Träger.

Zwischen den in Fig. 3 gezeigten voneinander beabstandeten Profilträgern 8 ist ein eben an die Oberflansche 11 der Profilträger 8 anschließender Tisch oder Platte 12 angeordnet, um den Auflagebereich und damit die Auflagefläche bei insbesondere großen einzulagernden Gegenständen zu vergrößern. Die Rollen 10 sind an dem Tisch 12 derart angeordnet, daß der einzulagernde Gegenstand auf ihnen abgesetzt werden kann. Die Rollen 10 werden dabei in Richtung des Lagerkanals 7 hintereinander fortlaufend angeordnet. Sofern es die Tischbreite zuläßt, können die Rollen 10 zusätzlich noch nebeneinander angeordnet werden. Zur Anpassung an unterschiedliche Größen der zu tragenden Gegenstände können die einzelnen, quer zum Lagerkanal 7 verlaufenden Rollenreihen beispielsweise zueinander versetzt angeordnet sein. Daneben können noch, wie bereits in Fig. 2 gezeigt, auch an den Oberflanschen 11 der Profilträger 8 zusätzliche Rollen 10 angeordnet sein.

Ferner können auch, wie in Fig. 4 gezeigt, zwischen den voneinander beabstandeten Profilträgern 8 diese verbindende walzenförmige Rollen 13 angeorndet sein. Auch hier können noch zusätzlich auf den Flanschen 11 weitere Rollen 10 angeordnet werden.

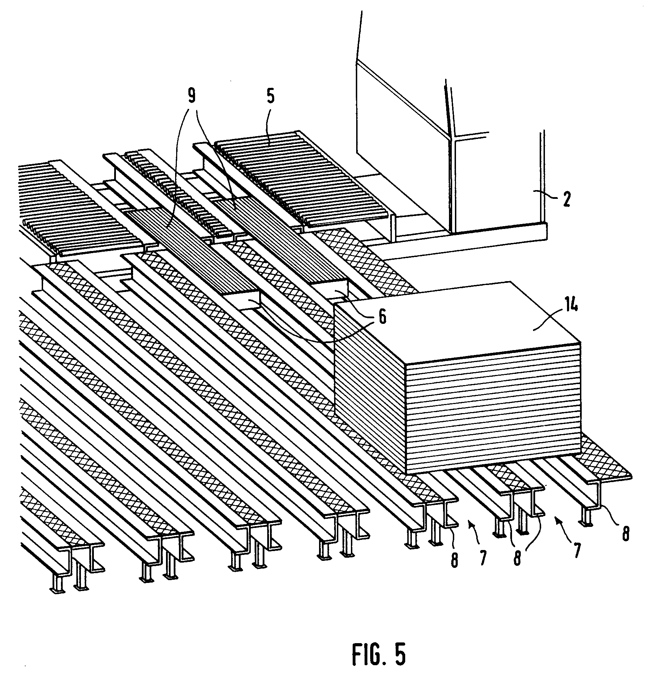

Um auch große Güter, bei denen die Gefahr besteht, daß sie sich im Bereich zwischen ihren randseitigen Auflagepunkten durchbiegen können und somit beschädigt werden können, einlagern zu können, ist eine Lageranordnung vorgesehen, wie sie in Fig. 5 gezeigt ist. Das Lagergut 14 wird dabei zusätzlich zur randseitigen Auflage im mittleren Bereich von den die Lagerkanäle 7 bildenden Profilträgern 8 abgestützt, so daß ein mittiges Durchbiegen des Lagergutes 14 nicht möglich ist. Auch bei einer derartigen Einlagerung der Lagergüter 14, die ja auf den Rollen 10 bzw. walzenförmigen Rollen 13 des Auflagebereiches ruhen, ist ein manuelles Verschieben in Richtung des Lagerkanales 7 zwecks Umlagerung möglich. Die Einlagerung der Güter 14 erfolgt derart, daß von dem Transferfahrzeug 2, auf dessen Plattform 5 zwei parallel zueinander verfahrbare Satellitenfahrzeuge 6 angeordnet sind, das auf der Plattform 5 befindliche Lagergut 14, nachdem das Transferfahrzeug die entsprechenden Lagerkanäle 7 angefahren hat, anheben und synchron gesteuert in die Lagerkanäle 7 einfahren. Nach Erreichen der vorbestimmten Position werden die Hubplattformen 9 der Satellitenfahrzeuge 6 gleichzeitig abgesenkt, so daß das Lagergut 14 auf den Rollen der Auflagebereiche abgesetzt wird. Die Satellitenfahrzeuge 6 fahren danach wieder in die Plattform 5 des Transferfahrzeuges 2 ein. Um ein Einlagern von sowohl großformatigem Lagergut 14 als auch kleinerformatigem Lagergut 3 in ein derartiges Kanallager zu ermöglichen, können die Satellitenfahrzeuge 6 zum Transport von kleineren Lagergütern 3 auch einzeln verfahren werden.

## Patentansprüche

1. Kanallager mit mehreren, aus Profilträgern gebildeten Lagerkanälen (7) zum Ein- und Auslagern von kisten- oder plattenförmigem Gut (14), insbesondere von Wellpappestapeln, das von einem Transferfahrzeug (2) aufgenommen und von einem von diesem ausfahrbaren, in die Lagerkanäle (7) ein- und verfahrbaren Satellitenfahrzeug (9) in die jeweilige Lagerreihe transportiert und an einem Auflagebereich positioniert wird, dadurch gekennzeichnet,
daß das Transferfahrzeug (2) zwei Satellitenfahrzeuge (6) aufweist, die wahlweise gemeinsam oder einzeln in sich parallel erstreckende Lagerkanäle (7) einfahrbar sind, und
daß die Auflagebereiche für die einzelnen Güter (14) so ausgebildet sind, daß sie sich über zwei oder mehr Lagerkanäle (7) erstrecken können.

2. Kanallager nach Anspruch 1, dadurch gekennzeichnet, daß die Auflagebereiche aus mehreren nebeneinander angeordneten, zwei oder mehrere Lagerkanäle (7) bildenden Profilträgern (8) gebildet werden.

3. Kanallager nach Anspruch 2, dadurch gekennzeichnet, daß die aus den Profilträgern (8) gebildeten Auflagebereiche mit Rollen (10) versehen sind, auf die das Lagergut (14) absetzbar ist.

4. Kanallager nach Anspruch 3, dadurch gekennzeichnet, daß die Rollen (10) an der Oberseite bzw. -kante (11) der Profilträger (8) angeordnet sind.

5. Kanallager nach Anspruch 3 oder 4, dadurch gekennzeichnet, daß die Rollen (10) bei beabstandeten Profilträgern (8) an zwischen den Profilträgern (8) angeordneten Tischen (12) neben- und/oder hintereinander angeordnet sind.

6. Kanallager nach Anspruch 3 oder 4, dadurch gekennzeichnet, daß die Rollen eine Walzenform (13) besitzen und bei beabstandeten Profilträgern (8) zwischen den Profilträgern (8), diese verbindend, angeordnet sind.

## Claims

1. Channel store having a plurality of storage channels (7) formed by section beams for placing into storage and removing from storage products (14) in box or sheet form, in particular stacks of corrugated cardboard, which are received by a transfer vehicle (2) and are transported into the respective storage row and positioned at a supporting region by a satellite vehicle (9), which may travel out from said transfer vehicle and move into and along the storage channels (7), characterized in
that the transfer vehicle (2) has two satellite vehicles (6), which may travel either jointly or individually into parallel extending storage channels (7), and
that the supporting regions for the individual products (14) are designed in such a way that they may extend over two or more storage channels (7).

2. Channel store according to claim 1, characterized in that the supporting regions are formed by a plurality of section beams (8), which are disposed alongside one another and form two or more storage channels (7).

3. Channel store according to claim 2, characterized in that the supporting regions formed by the section beams (8) are provided with rollers (10), onto which the storage products (14) may be deposited.

4. Channel store according to claim 3, characterized in that the rollers (10) are disposed on the top surface and/or top edge (11) of the section beams (8).

5. Channel store according to claim 3 or 4, characterized in that, given spaced-apart section beams (8), the rollers (10) are disposed adjacent to and/or behind one another on tables (12) disposed between the section beams (8).

6. Channel store according to claim 3 or 4, characterized in that the rollers have a cylindrical shape (13) and, given spaced-apart section beams (8), are disposed between the section beams (8) so as to connect the latter.

## Revendications

1. Entrepôt de canaux comportant plusieurs canaux de stockage (7) constitués de supports profilés, pour stocker et déstocker un produit (14) se présentant sous forme de caisse ou de plaque, en particulier de piles de cartons ondulés, supporté par un véhicule de transfert (2) et transporté dans la rangée de stockage respective par un véhicule satellite (9) susceptible d'être introduit et déplacé dans les canaux de stockage (7), en étant déployable depuis le véhicule de transfert, et positionné sur une zone de dépose,
caractérisé en ce que le véhicule de transfert (2) présente deux véhicules satellites (6) qui sont susceptibles d'être introduit à volonté, conjointement ou individuellement, dans les canaux de stockage (7) s'étendant parallèlement, et
en ce que les zones de dépose des différents produits (14) sont réalisées de manière à ce qu'elles puissent s'étendre sur deux canaux de stockage (7) ou plus.

2. Entrepôt de canaux selon la revendication 1, caractérisé en ce que les zones de dépose sont constituées de plusieurs supports profilés (8) disposés les uns à coté des autres, constituant deux canaux d'entrepôt (7) ou plus.

3. Entrepôt de canaux selon la revendication 2, caractérisé en ce que les zones de dépose constituées des supports profilés (8) sont pourvues de rouleaux (10) sur lesquels le produit à stocker (14) peut être posé.

4. Entrepôt de canaux selon la revendication 3, caractérisé en ce que les rouleaux (10) sont disposés sur l'arête, respectivement la face supérieure (11), des supports profilés (8).

5. Entrepôt de canaux selon la revendication 3 ou 4, caractérisé en ce que les rouleaux (10), lorsque les supports profilés (8) sont espacés, sont disposés les uns à coté des autres et/ou les uns derrière les autres sur des tables (12) disposées entre les supports profilés (8).

6. Entrepôt de canaux selon la revendication 3 ou 4, caractérisé en ce que les rouleaux ont une forme de cylindre (13) et sont disposés, lorsque les supports profilés (8) sont espacés, entre les supports profilés (8) en les reliant.
